# EUROPÄISCHE PATENTSCHRIFT

(11) **EP 3 083 002 B1**
(45) Veröffentlichungstag und Bekanntmachung des Hinweises auf die Patenterteilung: **31.03.2021**
(21) Anmeldenummer: 14821149.3
(22) Anmeldetag: 18.12.2014
(51) Int. Cl.: B01D 39/16

(54) **FILTERMEDIUM, FILTERELEMENT UND FILTERANORDNUNG**
FILTER MEDIUM, FILTER ELEMENT AND FILTER ARRANGEMENT
MATÉRIAU FILTRANT, ÉLÉMENT FILTRANT ET SYSTÈME FILTRANT

(30) Priorität: 18.12.2013 DE 102013021071
(43) Veröffentlichungstag der Anmeldung: 26.10.2016
(73) Patentinhaber: Mann+Hummel GmbH, 71636 Ludwigsburg (DE)
(72) Erfinder: KEERL, David, 95447 Bayreuth (DE); SCOPE, Andreas, 09600 Oberschoena (DE); PIRY, Alexander, 66606 St. Wendel (DE)
(74) Vertreter: Seyboth, Matthias
(86) Internationale Anmeldenummer: PCT/EP2014/078501
(87) Internationale Veröffentlichungsnummer: WO 2015/091822

(56) Entgegenhaltungen:
- WO-A1-2012/168185
- WO-A1-2014/019660
- DE-A1-102012 005 380
- US-A- 5 888 527
- US-A1- 2006 278 086

## Beschreibung

### Technisches Gebiet

Die vorliegende Erfindung betrifft ein Filtermedium, ein Filterelement und eine Filteranordnung, insbesondere einen Innenraumluftfilter und eine Innenraumluftfilteranordnung zum Reinigen von in den Innenraum eines Kraftfahrzeugs eintretender Luft.

### Stand der Technk

Aus Filtermedien hergestellte Filterelemente dienen der Filtrierung von insbesondere gasförmigen Medien, beispielsweise der Filtrierung einer Luftströmung, die dem Fahrzeuginnenraum eines Kraftfahrzeuges zugeführt wird. Obwohl auf beliebige Filterelemente anwendbar, werden die vorliegende Erfindung und die ihr zugrunde liegende Problematik nachfolgend mit Bezug auf ein Filtermedium bzw. Filterelement zur Filtrierung von Luft für den Innenraum eines Kraftfahrzeuges beschreiben. Solche Filter werden im Folgenden kurz als KFZ-Innenraumfilter bezeichnet.

Die zunehmende Luftverunreinigung, insbesondere in Großstädten, in Verbindung mit dem Einsatz von Klimaanlagen macht es wünschenswert und auch erforderlich, die von außen in den Innenraum eines Kraftfahrzeuges geleitete und aufbereitete bzw. klimatisierte Luft mittels geeigneter Filter zu filtern. Hierfür kommen bspw. Partikelfilter oder Geruchsfilter oder alternativ auch Kombinationen davon in Betracht, die die in der Luft enthaltenen Partikel sowie inhärente Gerüche aus der Umgebungsluft möglichst gut herausfiltern bzw. enthaltene Stoffe der Umgebungsluft adsorbieren sollen. Solche Filter zur Filtrierung von Luft für den Innenraum eines Kraftfahrzeuges sind in einer Vielzahl von Ausführungsformen und Varianten allgemein bekannt, so dass auf deren Aufbau und Funktionsweise nachfolgend nur kurz eingegangen wird.

Von den eingesetzten Filtermedien sollen auch Schadstoffe, wie beispielsweise Staub und Ruß, sowie Pollen, Bakterien- und Pilzsporen, Bakterien und Pilze, gefiltert werden. Einige Stoffwechselprodukte der Mikroorganismen sind bekannt dafür, dass sie allergene Stoffe für den menschlichen Körper bzw. dessen Immunsystem darstellen. Diese können allergische Reaktionen insbesondere im Bereich der Schleimhäute, bspw. der Atemwege, der Augen oder Nase, auslösen. Wünschenswert ist eine möglichst umfassende Filterung von Partikeln und anderen potenziell gesundheitsschädlichen Stoffen durch das Filtermedium.

Die EP 1 882 511 A2 offenbart beispielsweise ein Filtermedium mit bakterizider Wirkung, insbesondere zur Filterung von Luft für den Innenraum von Kraftfahrzeugen, bestehend aus mindestens einer Filterschicht, die Verunreinigungen herausfiltert, und einer dieser Filterschicht nachgeschalteten bakteriziden Filterschicht, die auf der Reinluftseite der mindestens einen Filterschicht angebracht ist und durch eine Abstandsschicht von der mindestens einen Filterschicht beabstandet ist.

Die WO 2012168185 A1 beschreibt ein Filtermedium mit antimikrobieller Wirkung, insbesondere zur Filterung von Luft für den Innenraum von Kraftfahrzeugen, bestehend aus mindestens einer ersten Filterschicht, die Verunreinigungen herausfiltert, und einer dieser ersten Filterschicht benachbarten zweiten Filterschicht. Die zweite Filterschicht ist auf der Anströmseite der ersten Filterschicht angebracht und enthält antimikrobielle Stoffe.

DE 10 2012 005 380 A1 offenbart ein Filtermedium zur Filterung von Luft für einen Innenraum eines Fahrzeugs umfassend eine Biozidschicht. Die Biozidschicht umfasst Mikrokapseln, welche aus zumindest einem Polymer gebildet sind, wobei auf und/oder in den Mikrokapseln zumindest ein Biozid gespeichert ist.

Aus US 2006/278086 A1 ist ein Innenraumluftreiniger bekannt, der ein Filterelement aufweist, das einen antiallergenen Stoff aufweist.

### Offenbarung der Erfindung

Vor diesem Hintergrund liegt der vorliegenden Erfindung die Aufgabe zugrunde, ein verbessertes Filtermedium, ein Filterelement und/oder eine verbesserte Filteranordnung zu schaffen.

Demgemäß wird ein Filtermedium nach Anspruch 1 vorgeschlagen.

Vorteilhaft kann dadurch, dass die zweite Filterschicht den antimikrobiellen und den antiallergenen Stoff aufweist, der antimikrobielle Stoff eine Verstoffwechselung bzw. einen Abbau des antiallergenen Stoffs insbesondere durch Pilze verhindern. Dies ist insbesondere für antiallergene Stoffe in Form von Polyphenolen relevant.

Die zweite Filterschicht kann ein Trägermaterial, insbesondere ein Fasermaterial, bspw. ein Faservlies, Fasergelege, Fasergewebe, Faserfilz, ein Spinnvlies-Material oder ein Melt-Blown-Material aufweisen, welches den antimikrobiellen Stoff und den antiallergenen Stoff umfasst bzw. in welche der antimikrobielle Stoff und der antiallergene Stoff eingebracht bzw. eingearbeitet (beispielsweise durch Aufsprühen) sind. Bei der zweiten Filterschicht kann es sich insbesondere um eine einzige, durchgängige Lage eines solchen Fasermaterials handeln.

Das Filtermedium ist insbesondere zur Filterung von Luft für den Innenraum von Kraftfahrzeugen eingerichtet. Andere Einsatzgebiete sind jedoch auch vorstellbar, z.B. in Klimaanlagen für Haustechnik.

Der antimikrobielle, insbesondere antibakterielle oder biozide, Stoff schützt das Filtermedium oder Teile bzw. Schichten desselben davor, dass dieses bzw. diese von Mikroorganismen wie z.B. Pilzen oder Pilzsporen, insbesondere Schimmelpilze oder Schimmelpilzsporen, Bakterien oder Algen, welche in lebendiger, fortpflanzungsfähiger oder ausbreitungsfähiger Form vorliegen können, befallen wird bzw. sich solche Mikroorganismen in dem Filtermedium ausbreiten oder dieses durchwachsen.

Der antiallergene Stoff kann beispielsweise feinste Pollenpartikel und sonstige Allergene, die nicht immer von dem Filtermedium vollständig zurückgehalten werden können, für den menschlichen Körper bzw. dessen Immunsystem zumindest teilweise unschädlich machen. Dies führt zu einem erhöhten Komfort im Fahrzeug.

Als antimikrobieller Stoff kann insbesondere Zink-Pyrithion dienen. Alternativ oder zusätzlich kann Octylisothiazolinon als antimikrobieller Stoff verwendet werden. Die zweite Filterschicht kann ferner antimikrobielle Stoffe auf der Basis von Nanosilber enthalten. Die zweite Filterschicht kann auch antimikrobielle Metalle und Metallverbindungen, insbesondere Silber, Kupfer und Aluminiumverbindungen und/oder 2-Brom-2-nitropropan-1,3-diol, weitere Isothiazolinonverbindungen, Benzoesäure und deren Derivate, Benzalkoniumhalogenide, wasserlösliche Coenzyme, öllösliche Coenzyme, Pflanzenextrakte, Antibiotika, biozide Metalle, aliphatische und/oder aromatische Fettsäuren und/oder quartäre Tenside als antimikrobielle Stoffe enthalten.

Als antiallergene Stoffe kommen insbesondere Polyphenole, wie Katechine, Tannine oder Flavonoide, in Frage. Es können insbesondere Kaffee-, Gallus-, Ellagin-, Tanninsäure, Cyanidin, Procyanidin, Proanthocyanidine, Rutin, Quercitin, Resveratol verwendet werden. Weiter kommen Polyphenole, z.B. Tannin oder Tanninsäure, insbesondere aus Holz (bspw. Baumrinde), Apfelextrakte oder Zitrusfruchtextrakte in Betracht. Polyphenole binden vorzugsweise allergene Stoffe, sodass die allergische Wirkung vermindert werden kann. Allergene werden beispielsweise von Polyphenolen denaturiert. Der antiallergene Stoff kann ferner antiallergene Enzyme aufweisen. Antiallergene Enzyme spalten vorzugsweise allergen wirkende Proteine in kleinere unschädlichere Bestandteile auf. Ganz allgemein kann die Menge der Polyphenole zwischen 3 und 15 g/m², vorzugsweise zwischen 5 und 10 g/m² in dem Filtermedium (insbesondere in der zweiten Filterschicht) betragen.

Insbesondere kann das Filtermedium, bevorzugt die zweite Filterschicht einen oder mehrere der in der folgenden Tabelle 1 und 2 gezeigten Stoffe, auch in beliebiger Kombination, enthalten:

**Tabelle 1**

| **Stoff** | **Bevorzugte Menge [g/m²]** | **Noch bevorzugtere Menge, [g/m²]** |
|---|---|---|
| Tannin und/oder Tanninsäure | 1 - 50 g/m² | 5-20 g/m² |
| Octylisothiazolinon | 0,5 - 30 g/m² | 1 - 15 g/m² |
| Farbstoff | 0,1 - 20 g/m² | 0,3 - 10 g/m² |
| Netzmittel | 0,05 - 5 g/m² | 0,1 - 3 g/m² |

**Tabelle 2**

| **Stoff** | **Bevorzugte Menge [Gew.-%]** | **Noch bevorzugtere Menge, [Gew.-%]** |
|---|---|---|
| Tannin und/oder Tanninsäure | 0,05 - 80 % | 1 - 25 % |
| Octylisothiazolinon | 0,5 - 50% | 1 - 20 % |
| Farbstoff | 0,1 - 30% | 0,3 - 10 % |
| Netzmittel | 0,05 - 10% | 0,1 - 3 % |

Die Tabellen 1 und 2 unterscheiden sich in ihrer Definition der Menge der in die zweite Filterschicht eingebrachten Stoffe, nämlich einerseits nach dem Flächengewicht und andererseits nach Gewichtsprozent (jeweils bezogen auf die zweite Filterschicht).

Das Filtermedium selbst kann mehrlagig aufgebaut sein.

Die verwendete Aktivkohle kann beispielsweise aus Holz oder Steinkohle gewonnen, polymer basiert, teerbasiert, oder Kokosnussschalen-basiert sein. In einer Ausführungsform werden als Grundstoff für die Aktivkohle lonenaustauscherkügelchen verwendet, die auf Polymerbasis, beispielsweise aus Kunstharzen, insbesondere aus mit Divinylbenzen vernetztem Polystyren hergestellt sind.

Als hydrophobe Aktivkohlen werden insbesondere solche verstanden, die eine vergleichsweise geringe Wasseraufnahmekapazität aufweisen. Es wird eine Aktivkohle verwendet, welche bei einer relativen Luftfeuchte von 50% eine Wasseraufnahme von <10 Massenprozent, insbesondere bezogen auf den Adsorptionsast der Isotherme aufweist. Besonders bevorzugt beträgt diese Wasseraufnahme <5 Massenprozent.

In einer Ausführungsform weist die Aktivkohle eine BET-Oberfläche von größer 600 m²/g auf, bevorzugt größer 800 m²/g (bevorzugt gemessen nach DIN ISO 9277:2003-05). Dadurch kann auf kleinem Bauraum eine ausreichende Adsorption sichergestellt werden.

In einer Ausführungsform wird Aktivkohle in schütt- oder rieselfähiger Form, beispielsweise in Form von körner- oder kugelartiger oder anderweitig geformter Partikel verwendet. Die Aktivkohlepartikel weisen bevorzugt Aktivkohlepartikelgrößen (mittlere Durchmesser) zwischen 0,1 und 1 mm, bevorzugt 0,2 bis 0,7 mm auf und können beispielsweise in der Form von Granulat-Aktivkohle oder Kugel-Aktivkohle vorliegen.

Für die Adsorptionslage kann beispielsweise ein offenporiger Schaum mit rieselfähiger Aktivkohle verwendet werden. Dabei kommen beispielsweise retikulierte Schäume z. B. aus Kunststoffen wie Polyurethan, Polyurethan-Ether oder Polyurethan-Ester zum Einsatz. Bevorzugt betragen die Porengrößen des Schaums zwischen 20 und 50 ppi (pores per inch) oder zwischen 0,5 und 2 Poren pro mm. Gemessen wird in einem vergleichenden optischen Verfahren, wobei unter dem Mikroskop eine vollständig ausgebildete Pore als "Standardpore" definiert und über einen Streckenabschnitt die dort auftretenden Poren mit dieser verglichen und ausgezählt werden. Poren, die im Vergleich zur Standardpore nicht vollständig ausgebildet sind, werden anteilig gezählt.

In diesem Schaum sind bevorzugt Aktivkohlepartikel eingebracht und vorzugsweise fixiert. Die Aktivkohlepartikel sind dabei vorzugsweise mittels eines Klebstoffes, beispielsweise mittels eines Zweikomponentenklebstoffs auf Polyurethanbasis, in dem Schaum fixiert. Dies kann beispielsweise dadurch erreicht werden, dass der Schaum zuerst mit einem Klebstoff getränkt wird und anschließend bevor der Klebstoff trocknet oder aushärtet Aktivkohlepartikel insbesondere unter Rütteln eingerieselt werden. Hierbei kann ein Zweikomponentenklebstoff, ein Schmelzklebstoff oder ein wässriger Klebstoff zum Einsatz kommen.

In einer Ausführungsform ist als Adsorptionsfilterlage eine Lage einer fixierten Schüttung mit Aktivkohle verwendet. Diese kann in einem einlagigen oder mehrlagigen Aufbau realisiert werden. Als fixierte Schüttung wird eine Anordnung bezeichnet, in welcher eine Trägerschicht vorgesehen ist und auf dieser eine Schüttlage von Aktivkohlepartikeln fixiert ist. Die Trägerschicht kann beispielsweise ein Kunststoffstreckgitter oder eine Lage eines flächigen Materials, zum Beispiel eines Partikelfiltermediums verwendet werden. In einer bevorzugten Ausführungsform kommt als Trägerschicht ein Vlies aus spinngebundenen oder schmelzgeblasenen Polyesterfasern, beispielsweise PET-Fasern (Polyethylenterephthalat) oder PBT-Fasern (Polybutylenterephtalat) verwendet. Dies kann ein Flächengewicht von 25-120 g/m², bevorzugt 50-100 g/m², besonders bevorzugt 60-90 g/m² und eine Luftdurchlässigkeit >3000 l/m²s, bevorzugt >4000 l/m²s bei einer Druckdifferenz von 200 Pa aufweisen. Gemessen wird die Luftdurchlässigkeit insbesondere nach ISO 9347. Die Schüttlage aus Aktivkohlepartikeln wird auf die Trägerschicht aufgebracht und bevorzugt mittels eines feinen Klebstoffauftrags auf der Trägerschicht fixiert. Dies erfolgt beispielsweise in Form einer Vielzahl von auf der Trägerschicht aufgebrachter Klebstoffpunkte oder mittels eines Netzes aus Klebstofffäden, die zwischen Trägerschicht und Schüttlage und/oder zwischen die Schüttlage während der Schüttung und/oder auf die Schüttlage aufgebracht ist.

Die Schüttlage umfasst bevorzugt eine Auflage von 100-1200 g/m² Aktivkohlepartikel auf der Trägerschicht. Bevorzugt kommen zwischen 200 und 600 g/m² zum Einsatz. Die Lage einer fixierten Schüttung mit Trägerlage und Schüttlage weist bevorzugt eine Luftdurchlässigkeit im Bereich von 800 - 1300 l/m²s, insbesondere zwischen 900 und 1200 l/m²s und ein Flächengewicht im Bereich von 350 bis 950 g/m², insbesondere zwischen 450 und 750 g/m² bei einer Lagendicke insbesondere im Bereich von 1 bis 6 mm auf.

Auf diese Weise wird eine stabile, gut zu verarbeitende und leistungsfähige Lage einer fixierten Schüttung bereitgestellt, die maschinell zu mehrlagigen Halbzeugen zusammengefasst werden kann.

In einer Ausführungsform weist die Adsorptionsfilterlage bzw. der Adsorptionsaufbau einen Schichtaufbau aus mehreren fixierten Schüttungen auf. So kann beispielsweise eine erste Lage einer fixierten Schüttung mit der Seite, auf der die Aktivkohle angeordnet ist (Aktivkohleseite), auf die Aktivkohleseite einer zweiten Lage fixierter Schüttung gelegt und mit dieser beispielsweise durch Verkleben verbunden werden. Dadurch wird ein Halbzeug mit zwei Träger- oder Deckschichten und dazwischen angeordneter Schüttlage gebildet. Derartige Halbzeuge können wiederum zur Erhöhung der Filtrationsleistung mehrfach übereinander angeordnet werden, beispielsweise zwischen zwei und 10 Halbzeuge, bevorzugt zwischen 3 und 7 Halbzeuge. Alternativ oder in Kombination sind auch Anordnungen denkbar, bei welchen jeweils die Trägerlage einer Lage einer fixierten Schüttung auf die Aktivkohlelage einer anderen fixierten Schüttung aufgelegt ist. Diese Anordnung kann dann durch eine gewendete Lage mit fixierter Schüttung oder eine Deckschicht abgeschlossen werden. Beispielsweise können zwischen 4 und 20 Lagen einer fixierten Schüttung aufeinander angeordnet sein.

Gemäß einer weiteren Ausführungsform ist die erste, zweite und/ oder eine weitere Filterschicht als Feinfilter, insbesondere zum Herausfiltern von Partikeln mit einem Durchmesser 10 µm und größer, bevorzugt 2,5 µm und größer, ausgebildet.

Ein derartiges Filtermedium ist besonders geeignet für einen Kraftfahrzeuginnenraumfilter. Hierbei wird das Filtermedium bevorzugt gefaltet oder gewellt zur Vergrößerung der Oberfläche. In verschiedenen Ausführungsformen kann das gefaltete oder gewellte Filtermedium zumindest an einer Seite mit einem Seitenband aus Vlies versehen sein oder in einen Kunststoffrahmen eingespritzt sein. Das gefaltete oder gewellte Filtermedium kann an mindestens einer seiner Stirnkanten, dies sind die Seiten des gefalteten oder gewellten Filtermediums, die eine Zickzack- oder Wellenform aufweisen, mit einem Seitenband, insbesondere einem Seitenband aus Vlies, versehen sein.

Ein Kraftfahrzeuginnenraumfilter mit dem beschriebenen Filtermedium kann als austauschbares Filterelement in einem Filtermodul, insbesondere dem Filtermodul einer Kraftfahrzeugklimaanlage, mit einer Filteraufnahme oder einem Filtergehäuse eingesetzt werden.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform des Filtermediums, des Filterelements oder der Filteranordnung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine schematische Darstellung einer Ausführungsform eines Filtermediums;
Fig. 2A - 2C eine schematische Darstellung von Ausführungsformen eines Filtermediums jeweils mit einem Adsorptionsmaterial (Fig. 2B, 2C nicht erfindungsgemäß);
Fig. 3 eine schematische Darstellung einer Ausführungsform eines Filterelements und
Fig. 4 eine schematische Darstellung einer Ausführungsform einer Filteranordnung.

In den Figuren sind gleiche oder funktionsgleiche Elemente, sofern nichts anderes angegeben ist, mit denselben Bezugszeichen versehen worden.

### Ausführungsform(en) der Erfindung

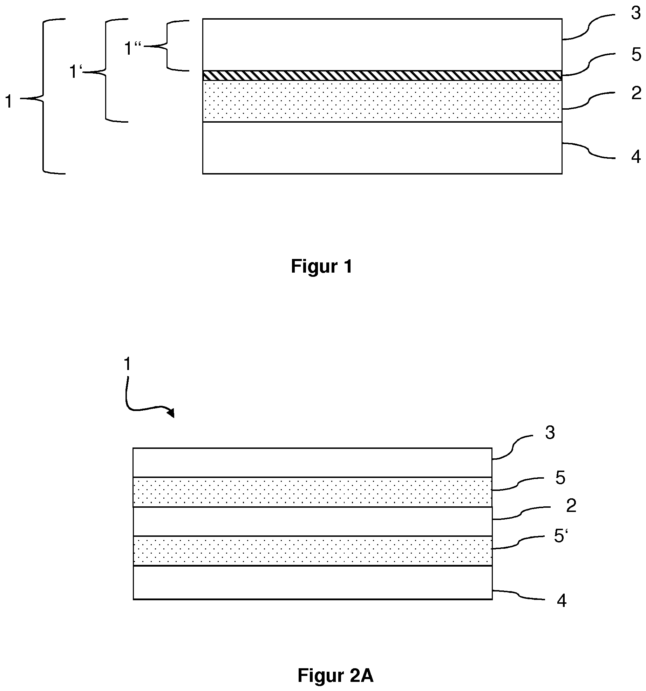

Fig. 1 zeigt einen möglichen Aufbau eines nicht erfindungsgemäßen Filtermediums 1 mit einer ersten Filterschicht 2 zum Partikelfiltern, einer zweiten Filterschicht 3 mit einem antimikrobiellen Stoff und einer dritten Filterschicht 4 mit einem antiallergenen Stoff. Die Filterschichten 2, 3, 4 können grundsätzlich in beliebiger Reihenfolge, also auch abweichend von der hier gezeigten angeordnet sein. Das Filtermedium 1 wird senkrecht zu seiner flächigen Erstreckung von Luft durchströmt. Die Strömungsrichtung kann dabei beliebig gewählt werden. Eine der Filterschichten 2, 3, 4 kann als Trägerschicht für die jeweils anderen Schichten fungieren.

Die Filterschichten 2, 3, 4 weisen beispielsweise jeweils ein Fasermaterial, insbesondere ein Gelege, ein Gewebe, einen Filz, ein Vlies, ein Spinnvlies-Material (z.B. mit einer Flächendichte zwischen 40 und 70 g/qm) oder ein Melt-Blown-Material auf. Die Filterschichten 2, 3, 4 können aus einer zusammenhängenden Lage Fasermaterial gebildet sein, wobei sich die Schichtabfolge lediglich daraus ergibt, dass ein erster Bereich 2 des Materials zum Partikelfiltern, ein zweiter Bereich 3 mit dem antimikrobiellen Stoff ausgerüstet und ein dritter Bereich 4 mit dem antiallergenen Stoff ausgerüstet vorgesehen ist. Die Bereiche 2, 3, 4 können in Strömungsrichtung hintereinandergeschaltet sein. Alternativ können die Filterschichten aus mehreren separaten Lagen 2, 3, 4 Fasermaterial gebildet sein, die insbesondere miteinander verklebt sind. Die erste Lage 2 weist dann die Partikelfilterfunktion auf, die zweite Lage 3 den antimikrobiellen Stoff und die dritte Lage 3 den antiallergenen Stoff. Die vorstehenden Erläuterungen zu den Bereichen und Lagen gelten für alle vorliegenden Ausführungsformen entsprechend.

Die beiden Filterschichten 2, 3 können in einer anderen Ausführungsform ein eigenständiges Filtermedium 1' (ohne die Filterschicht 4) bilden, das eine Filterschicht 2 zum Filtern von Partikeln und eine Filterschicht 3 mit einem antiallergenen Stoff und einem antimikrobiellen Stoff umfasst. Beispielsweise kann zwischen der ersten und zweiten Filterschicht 2, 3 eine Adsorptionsfilterlage 5 mit Aktivkohle angeordnet sein. Die zweite Filterschicht 3 kann anström- oder abströmseitig in Bezug auf die erste Filterschicht 2 angeordnet sein.

In einer nicht erfindungsgemäßen Ausführung kann die Filterschicht 2 die Partikelfilterfunktion aufweisen und den antiallergenen Stoff enthalten. Die Filterschicht 3 weist dann den antimikrobiellen Stoff auf. In einer nicht erfindungsgemäßen weiteren Variante kann die Filterschicht 2 die Partikelfilterfunktion aufweisen und den antimikrobiellen Stoff enthalten. Die Filterschicht 3 weist in dieser Variante den antiallergenen Stoff auf.

In einer noch weiteren nicht erfindungsgemäßen Ausführungsform umfasst das Filtermedium 1" nur die Filterschicht 2, die einen antiallergenen und einen antimikrobiellen Stoff enthält, und darüber hinaus die Partikelfilterfunktion aufweist. Beispielsweise kann die Filterschicht 2 beidseitig mit Wirkstoffen belegt sein. Insbesondere ist die zweite Filterschicht 3 der Fig. 1 eine oberseitige Stoffbelegung mit einem antimikrobiellen Stoff und die dritte Filterschicht 4 eine unterseitige Stoffbelegung mit einem antimikrobiellen Stoff.

Die vorstehende Partikelfilterfunktion kann beispielsweise insbesondere auch ein Herausfiltern von Partikeln mit einem Durchmesser von 2,5 µm und kleiner, dem sogenannten Feinstaub, realisieren (entsprechend dem sog. 1997 PM2.5 Standard der Environmental Protection Agency (EPA)). Insbesondere kann eine Filtrationseffizienz von größer 90 % für die aerodynamisch bestimmte Partikelgrößenfraktion von 0,3 bis 2,5 µm, bestimmt gemäß DIN 71460-1, mit Teststaub A4 gemäß ISO 12103-1, bei einem Volumenstrom von 300 m³/h erreicht werden. Bevorzugt ist diese Filtrationseffizienz größer 92 % und in bestimmten Anwendungen größer als 97 %. Ein solcher Feinfilter kann beispielsweise auch in einer weiteren (nicht gezeigten) Filterschicht vorgesehen sein.

Die Filterschicht 2 ist vorzugsweise eine mit Aktivkohle als Adsorber versehene Schicht, die auch mehrlagig sein kann.

Das Filtermedium 1, 1', 1" ist in der Lage, Mikroorganismen, insbesondere Pilze oder Pilzsporen, abzutöten und gleichzeitig einen Bewuchs des Filtermediums mit Bakterien, Pilzen und sonstigen Mikroorganismen und insbesondere ein Durchwachsen wirkungsvoll zu verhindern. Unter Durchwachsen versteht man die Ausbreitung von mycelbildenden Mikroorganismen durch eine Sperrschicht, z.B. eine biozide Schicht hindurch. Dies kann auch durch Bakterien geschehen, die sich durch diese Schicht hindurch ausbreiten. Somit kann ein Durchwachsen auch von mycelbildenden Mikroorganismen wirkungsvoll verhindert werden. Die Schimmelpilzsporen werden zum Beispiel aufgrund ihrer Größe (2-100 µm, typischerweise 2-10 µm) partiell von der antimikrobiellen Filterschicht 3 zurückgehalten bzw. treffen auf die mit dem antimikrobiellen Wirkstoff ausgerüstete Filterlage und können dadurch inaktiviert bzw. am Wachstum gehindert werden.

Ein Trägermaterial, insbesondere Fasermaterial, kann zum Ausbilden einer Filterschicht mit der gewünschten Wirkung mit verschiedenen antimikrobiellen Wirkstoffen, wie z.B. Silber, Kupfer, Aluminiumverbindungen ausgerüstet sein. Ein möglicher antimikrobieller Stoff ist Zn-Pyrithion, da es einen wesentlichen pilzhemmenden Effekt und eine sehr geringe Löslichkeit in Wasser aufweist. Ein weiterer Stoff ist Octylisothiazolinon. Außerdem sind Ausrüstungen auf der Basis von Nanosilber und chemisch wirkenden Stoffen möglich, wie z.B. 2-Brom-2-nitropropan-1,3-diol, Isothiazolinonverbindungen, Benzoesäure und Benzoesäurederivate, Benzalkoniumhalogenide, wasserlösliche und öllösliche Coenzyme, Pflanzenextrakte, weitere biozide Metalle, aliphatische und aromatische Fettsäuren sowie quartäre Tenside, wobei sich die Wirkstoffe sowohl als weitere Option als auch in Kombination mit Zn-Pyrithion einsetzen lassen.

Als antiallergene Stoffe - nicht nur in Bezug auf Pollen - kommen insbesondere Polyphenole, wie Katechine, Tannine oder Flavonoide wie etwa Anthocyanidine, Flavanone, Flavonole, Flavaole oder Isoflavone, Stilbene, Ligane, Ellagitannine oder Phenolsäure in Frage. Diese können sowohl auf der Stufe der allergischen Sensibilisierung als auch bei einer erneuten Aussetzung durch das Allergen wirken: Polyphenol kann unlösliche Komplexe mit allergenen Proteinen bilden, sodass diese hypoallergen werden. Auch können Polyphenole die T-Zellen-Proliferation und Zytokinproduktion behindern sowie die Antikörperproduktion via B-Zellen beeinflussen. Es können insbesondere Kaffee-, Gallus-, Ellagin-, Tanninsäure, Cyanidin, Procyanidin, Proanthocyanidine, Rutin, Quercitin, Resveratol, Olivenblattextrakte, Gingkoblattextrakte sowie Baumrindenextrakte eingesetzt werden. Weiter kommen als Polyphenole Tannin und/oder Tanninsäure insb. aus Holz (bspw. Baumrinde), Apfelextrakte oder Zitrusextrakte in Betracht. Insbesondere können auch synthetisch erzeugte Polyphenole als antiallerge Stoffe verwendet werden. Kombinationen der vorgenannten, unterschiedlichen Polyphenole sind ebenfalls möglich.

Die Ausrüstung der Filterschicht oder Filterschichten mit den antimikrobiellen oder antiallergenen Stoffen kann mit Hilfe unterschiedlicher Prozesse, wie z.B. durch Sprühaufbringung, Pflatschen, Thermosolierung oder mittels einer Foulardmaschine durchgeführt werden. Die funktionalisierte Schicht wird dabei vorteilhafterweise auf die Anströmseite und/oder der Abströmseite aufgebracht. Durch den mehrlagigen Sandwichaufbau ist es möglich, die eigentliche Partikelfilterschicht 2 zu schützen und so eine hohe Filtrationseffizienz sicherzustellen. Außerdem bietet der Sandwichaufbau den Vorteil, dass sich auf diese Weise verschiedene Filtermedien, die bei Kfz-Innenraumfiltern eingesetzt werden, mit einer zusätzlichen antimikrobiellen und/oder antiallergenen Schicht ausrüsten lassen, die als zusätzliche Option für die bestehenden Filter angeboten werden kann (bei Kfz-Innenraumfiltern wird eine Vielzahl von unterschiedlichen Filtermedien eingesetzt, die sowohl auf regionale als auch auf herstellerspezifische Anforderungen zugeschnitten sind). Zudem lassen sich durch die zusätzliche antimikrobielle und/oder antiallergene Schicht angepasste Lösungen für unterschiedliche Anwendungsgebiete erreichen. So spielen bei unterschiedlichen klimatischen Bedingungen auch unterschiedliche Mikroorganismen beim Wachstum auf Filtermedien eine Rolle, so dass die auf der zweiten Filterschicht angebrachten antimikrobiellen Stoffe dementsprechend ausgewählt werden können und zusätzlich die Grammatur variiert werden kann. Auch die Art der möglichen Allergene, wie Pollen, kann bei der Funktionalisierung mit antiallergenen Stoffen, wie Polyphenolen, berücksichtigt werden.

Zusätzlich oder alternativ kann die eine Filtrationseffizienz bestimmende Lage (Melt-blown) durch einen Masterbatch mit antimikrobiellen und/oder antiallergenen Wirkstoffen ausgerüstet werden bzw. das Medium kann durch das zusätzliche Einbringen von antimikrobiellen Fasern oder antiallergenen Fasern oder Partikeln, die über einen Masterbatch hergestellt wurden, eine gesteigerte Wirksamkeit aufweisen.

Das nachträgliche Aufbringen des jeweiligen Wirkstoffs bietet gegenüber der Zugabe direkt bei der Faserherstellung (Masterbatch) den Vorteil, dass geringere Wirkstoffkonzentrationen ausreichend sind, da sich der Wirkstoff außen an der Faser befindet und damit in direktem Kontakt mit den Mikroorganismen steht. Ein Vorteil bei der Masterbatch-Herstellung bzw. bei der Zugabe von Fasern aus einem Masterbatchprozess liegt darin, dass die antimikrobiellen Wirkstoffe besonders fest mit der Faser verankert sind.

Die Filterschicht 2 kann insbesondere als Adsorptionsfilterlage ausgestaltet sein. Diese kann beispielsweise selbst aus einem mehrlagigen Aufbau aus aufeinanderliegend angeordneten Lagen von fixierten Schüttungen von Aktivkohlepartikeln auf Trägerlagen bestehen oder auch aus einem offenporigen Schaum mit eingerieselter Aktivkohle gebildet sein. Es können dabei mehrere Doppellagen von fixierten Schüttungen aufeinanderliegend angeordnet sein, die beispielsweise jeweils eine Trägerlage aus Spinnvlies von schmelzgeblasenen PET-Fasern (Polyethylenterephthalat) mit einem Flächengewicht von bspw. 85 g/m² und einer Luftdurchlässigkeit von bspw. 5500 l/m²s bei 200 Pa haben. Darauf ist mittels eines in dünnen Fasern aufgetragenen Klebstoffs auf Polyurethanbasis eine Schüttung aus Aktivkohlekügelchen von bspw. 400 g/m² aufgebracht. Diese weist vorzugsweise bei einer relativen Luftfeuchte von 50% eine Wasseraufnahme von beispielsweise 9 Massenprozent und eine BET-Oberfläche von beispielsweise 900 m²/g auf. Die Aktivkohlepartikel haben in der Regel Durchmesser im Bereich von 0,2 bis 0,7 mm auf.

Bei einer Variante ist die Adsorptionsfilterlage aus Aktivkohlepartikeln gebildet, die einen offenporigen (retikulierten) Schaum aus Polyurethan mit einer Porendichte von durchschnittlich 40 ppi (pores per inch) oder 1,6 Poren pro mm umfasst, in welchen die Aktivkohlepartikel eingerieselt und mittels eines Zweikomponentenklebstoffs auf Polyurethanbasis, in dem Schaum fixiert sind. Beide Varianten von Absorptionslagen weisen in Durchströmungsrichtung eine Erstreckung von 30 mm auf.

Die Fig. 2A zeigt eine weitere Ausführungsform eines Filtermediums 1. Es sind zwei Filterschichten 5, 5' mit einem Adsorbermaterial vorgesehen, zwischen denen eine Filterschicht 2 angeordnet ist. Die Filterschichten 5, 5' sind wiederum zwischen Filterschichten 3, 4 angeordnet. Die Filterschicht 3 ist antimikrobiell und antiallergen funktionalisert. Des Weiteren kann die Filterschicht 3 abströmseitig angeordnet sein. Die Filterschicht 4 kann antiallergen und vorzugsweise zusätzlich antimikrobiell funktionalisert sein. Des Weiteren kann die Filterschicht 4 anströmseitig angeordnet sein.

Die Filterschicht 2 ist zum Beispiel als Feinfilterlage ausgebildet. Die Feinfilterlage 2 ist beispielsweise als ein ungefaltetes, also flächiges, oder zickzackförmig gefaltetes Filtermedium aus einer Faserlage mit beispielsweise synthetischen Fasern. Hierbei kann beispielsweise auch ein Faservlies verwendet werden. Dieses weist bevorzugt eine einseitig oder beidseitig kaschierte Deckschicht aus einem Spinnvlies auf. Dadurch wird insbesondere ein mechanischer Schutz der oft empfindlichen Feinfilterlage erreicht. Dies ist insbesondere von Vorteil, wenn das Filtermedium 1 und damit auch die Feinfilterlage gefaltet werden, da hierdurch insbesondere das Medium vor Beschädigungen beim Falten geschützt werden kann. Ferner können derartige Deckschichten zur Verbesserung der mechanischen Festigkeit der Feinfilterlage 2 beitragen.

Die Spinnvliese der Deckschicht(en) sind dabei insbesondere aus einem Polyester oder Polypropylen oder Polyamid als Werkstoff gebildet. Zum Beispiel weisen die Spinnvliese der Deckschicht(en) Flächenmassen im Bereich von 10 bis 250 g/m², bevorzugt 15 bis 60 g/m² und besonders bevorzugt 15 bis 40 g/m² auf. Bevorzugte Schichtdicken für die Deckschichten liegen im Bereich von 0,1 bis 0,3 mm.

Das Spinnvlies der Deckschichten kann aus Endlosfasern gebildet sein, die mittels temperierter Luft und/oder Galetten verstreckt und auf ein Transportband wirr abgelegt werden. Nachfolgend kann optional ein Kalanderprozess zum Erzeugen eines Faserverbunds und/oder Beeinflussung der Vliesoberflächen erfolgen. Die jeweilige Deckschicht ist insbesondere mit Hilfe eines Kalanderprozesses mit dem Glasfaserpapier verbunden.

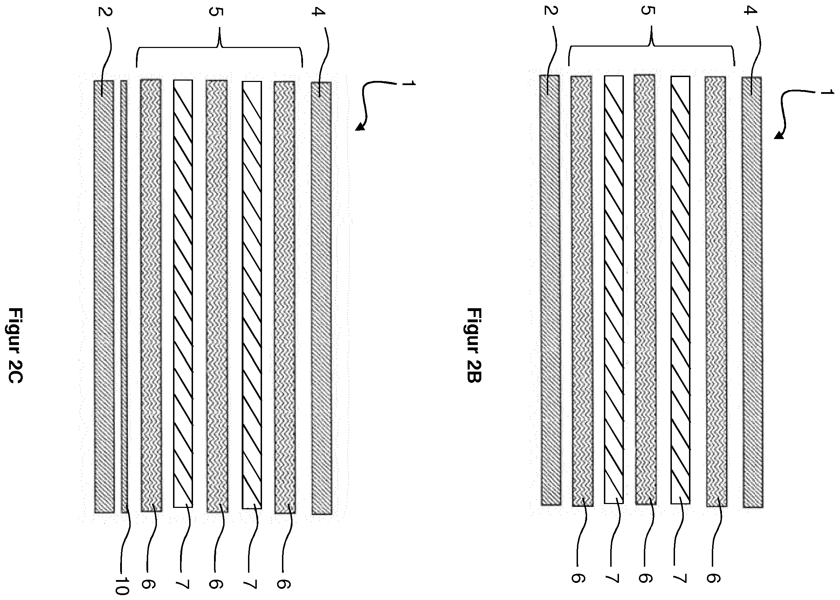

Fig. 2B zeigt ein nicht erfindungsgemäßes Filtermedium 1 mit einer Filterschicht 4, die als Trägerschicht fungiert. Die Filterschicht 4 ist beispielsweise als Filtervlies ausgebildet und mit einem antiallergenen Stoff ausgerüstet. Weiterhin umfasst das Filtermedium 1 eine Filterschicht 2, die als Filtervlies zur Partikelabscheidung ausgebildet und mit einer antimikrobiellen, insbesondere bioziden, Ausrüstung vorgesehen ist. Zwischen den Filterschichten 2, 4 ist ein mehrlagiger Adsorptionsaufbau 5 vorgesehen. Dieser umfasst drei Klebschichten 6 (dabei kann es sich auch um Träger- bzw. Deckschichten handeln) mit zwei jeweils dazwischen angeordneten Aktivkohleschichten 7. In Bezug auf die Beschaffenheit der Aktivkohleschichten gilt das vorstehend Ausgeführte.

Das nicht erfindungsgemäße Filtermedium 1 aus Fig. 2C unterscheidet sich von demjenigen aus Fig. 2B dadurch, dass die Filterschicht 2 als ein Feinstaubfiltervlies ausgebildet ist, das einen antimikrobiellen Stoff umfasst und dazu eingerichtet ist, Feinstaub mit einem Partikeldurchmesser von 2,5 µm und kleiner aus der Luft zu filtern (sog. PM2.5-Vlies, das eine Filtrationseffizienz von größer 90 % bevorzugt größer 92 % für die aerodynamisch bestimmte Partikelgrößenfraktion von 0,3 bis 2,5 µm, bestimmt gemäß DIN 71460-1, mit Teststaub A4 gemäß ISO 12103-1, bei einem Volumenstrom von 300 m³/h, aufweist). Zwischen der Filterschicht 2 und dem Adsorptionsaufbau 5 kann eine Gaze 10 angeordnet sein.

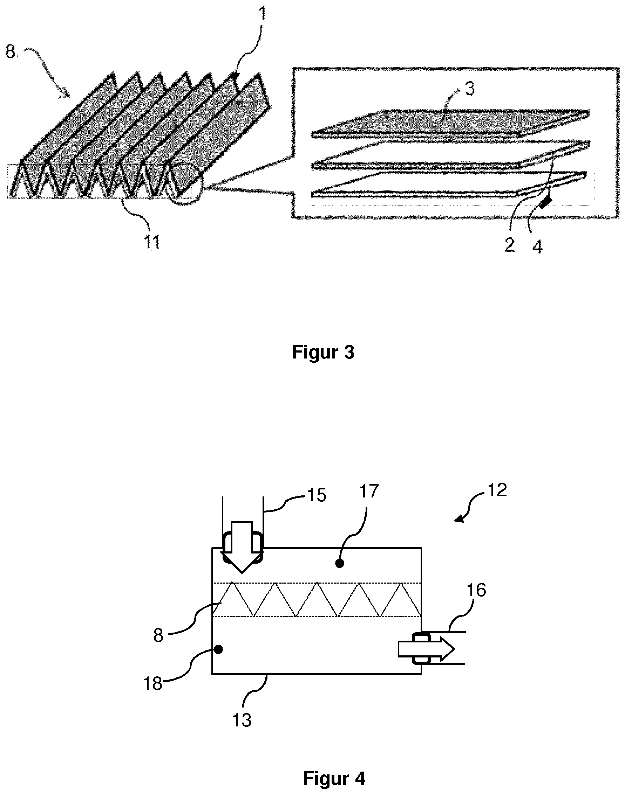

Die Fig. 3 zeigt ein Ausführungsbeispiel für ein Filterelement 8, das ein flächiges Filtermedium 1 umfasst. Das Filtermedium 1 ist dreilagig aufgebaut und umfasst eine Partikelrückhalteschicht 2, die zwischen einer antimikrobiellen Filterschicht 3 und einer antiallergenen Filterschicht 4 liegt. Die Partikelrückhalteschicht 2 dient als Trägerschicht für die beiden anderen Filterschichten 3, 4. Das Filtermedium 1 ist zickzackförmig gefaltet, damit die Filterfläche erhöht wird. Man spricht auch von einem Faltenpack. Seitlich ist ein optionales Seitenband 11 dargestellt, das auf die Faltprofile angebracht ist und diese stabilisiert. Mögliches Schüttgut, wie Adsorberpartikel, zwischen den Lagen 2, 3, 4 wird durch das beispielsweise angeklebte Seitenband 11 zwischen den Lagen gehalten und am Herausrieseln gehindert.

Im bestimmungsgemäßen Einsatz strömt zu reinigende Rohluft durch das Faltenpack bzw. das Filterelement 8. Dabei werden insbesondere Staubpartikel und Flüssigkeitspartikel zurückgehalten. Die antibakteriellen und/oder antimikrobiellen Stoffe im Filtermedium 1 erlauben einen besonders hygienischen Betrieb. Außerdem werden Allergiker vor Allergenen geschützt. Gesäuberte Reinluft tritt aus dem Filterelement 8 aus und kann beispielsweise in einen Fahrgastinnenraum eines Fahrzeugs oder zur weiteren Klimatisierung geleitet werden.

Die Fig. 4 zeigt ein Ausführungsbeispiel für eine Filteranordnung 12, die als Filtermodul einer Kraftfahrzeugklimaanlage ausgestaltet sein kann. Eine Filteraufnahme bzw. eine Filtergehäuse 13 hält ein Filterelement 8, zum Beispiel wie es in den vorherigen Ausführungsbeispielen angedeutet ist. Rohluft strömt durch einen Einlass 15 in das Gehäuse 13 ein und tritt gereinigt als Reinluft an einem Auslass 16 aus. Das Filterelement 8 trennt einen Rohluftbereich 17 von einem Reinluftbereich 18 und ist seitlich gegenüber dem Gehäuse 13 abgedichtet.

Das vorgeschlagene Filtermedium kann nicht nur in Innenraumfiltern für Kraftfahrzeuge zur Anwendung kommen. Weitere Einsatzgebiete sind Staubsaugerfilter, Filterelemente für Gebäude- und Standklimaanlagen, Filterelemente für Luftreiniger, Atemfilter und dgl. Außerdem können weitere Filterschichten vorgesehen werden, die spezielle Rückhalteeigenschaften aufweisen.

## Patentansprüche

1. Filtermedium (1'), insbesondere zur Filterung von Luft für den Innenraum eines Kraftfahrzeugs, umfassend eine erste Filterschicht (2) zum Zurückhalten von Partikeln sowie eine zweite Filterschicht (3), welche einen antimikrobiellen Stoff und einen antiallergenen Stoff aufweist und ferner aufweisend eine Adsorptionslage (5) mit hydrophober Aktivkohle, welche bei einer relativen Luftfeuchte von 50% eine Wasseraufnahme von <10 Massenprozent aufweist, wobei die Adsorptionslage (5) zwischen der ersten und zweiten Filterschicht (2, 3) angeordnet ist.

2. Filtermedium nach Anspruch 1, wobei der antiallergene Stoff Polyphenole aufweist.

3. Filtermedium nach Anspruch 2, wobei die Polyphenole Tannin oder Tanninsäure, Apfelextrakte oder Zitrusfruchtextrakte aufweisen.

4. Filtermedium nach Anspruch 3, wobei das Tannin oder die Tanninsäure aus Holz, insbesondere Baumrinde, gewonnen ist.

5. Filtermedium nach einem der Ansprüche 1 - 4, wobei der antiallergene Stoff Enzyme aufweist.

6. Filtermedium nach einem der Ansprüche 1 - 5, wobei der antimikrobielle Stoff ausgewählt ist aus der Gruppe bestehend aus antimikrobiellen Metallen und Metallverbindungen, insbesondere Silber, Kupfer und Aluminiumverbindungen, Nanosilber, Zink-Pyrithion, Octylisothiazolinon, 2-Brom-2-nitropropan-1,3-diol, Isothiazolinonverbindungen, Benzoesäure und deren Derivate, Benzalkoniumhalogenide, wasserlösliche Coenzyme, öllösliche Coenzyme, Pflanzenextrakte, Antibiotika, biozide Metalle, aliphatische und aromatische Fettsäuren und quartäre Tenside.

7. Filtermedium nach einem der Ansprüche 1 - 6, wobei der antimikrobielle Stoff und/ oder der antiallergene Stoff durch Sprühaufbringung, Pflatschen oder mit Hilfe einer Foulardmaschine aufgebracht ist.

8. Filtermedium nach einem der Ansprüche 1 - 7, wobei die Adsorptionslage (5) einen offenporigen Schaum mit rieselfähiger Aktivkohle oder eine fixierte Schüttung aus Aktivkohle umfasst.

9. Filtermedium nach einem der Ansprüche 1 - 8, wobei die Adsorptionslage (5) Klebschichten (6) und dazwischen eingebrachte, rieselfähige Aktivkohle (7) aufweist.

10. Filtermedium nach einem der Ansprüche 1 - 9, wobei die erste und/oder zweite Filterschicht (2) als Feinfilter, insbesondere zum Herausfiltern von Feinstaub, mit einer Filtrationseffizienz von größer 90 %, bevorzugt größer 92 % und weiterhin bevorzugt größer 97 %, für die aerodynamisch bestimmte Partikelgrößenfraktion von 0,3 bis 2,5 µm, bestimmt gemäß DIN 71460-1 mit Teststaub A4 gemäß ISO 12103-1 bei einem Volumenstrom von 300 m³/h, ausgebildet ist.

11. Filtermedium nach einem der Ansprüche 1 - 10, wobei die zweite Filterschicht (3) abström- oder anströmseitig in Bezug auf die erste Filterschicht (2) angeordnet ist.

12. Kraftfahrzeuginnenraumfilter (8) mit einem Filtermedium (1') nach einem der Ansprüche 1 - 11.

13. Filteranordnung (12), insbesondere Filtermodul einer Kraftfahrzeugklimaanlage, mit einer Filteraufnahme (13) und einem Kraftfahrzeuginnenraumfilter (8) nach Anspruch 12.

## Claims

1. Filter medium (1'), in particular for filtering air for the passenger compartment of a motor vehicle, comprising a first filter layer (2) for retaining particles as well as a second filter layer (3), which features an antimicrobial substance and an antiallergenic substance and further comprising an adsorption layer (5) with hydrophobic activated carbon, which features a water absorption of <10 mass percent at a relative humidity of 50%, wherein the adsorption layer (5) is disposed between the first and second filter layers (2, 3).

2. Filter medium according to claim 1, wherein the antiallergenic substance contains polyphenols.

3. Filter medium according to claim 2, wherein the polyphenols contain tannin or tannic acid, apple extracts or citrus-fruit extracts.

4. Filter medium according to claim 3, wherein the tannin or the tannic acid is extracted from wood, in particular from bark.

5. Filter medium according to one of the claims 1 to 4, wherein the antiallergenic substance contains enzymes.

6. Filter medium according to one of the claims 1 to 5, wherein the antimicrobial substance is selected from the group consisting of antimicrobial metals and metallic compounds, in particular silver, copper and aluminum compounds, nano silver, zinc pyrithione, octylisothiazolinone, 2-bromo-2-nitropropane-1,3 diol, isothiazolinone compounds, benzoic acid and its derivatives, benzalkonium halides, water-soluble coenzymes, oil-soluble coenzymes, plant extracts, antibiotics, biocidal metals, aliphatic and aromatic fatty acids and quaternary surfactants.

7. Filter medium according to one of the claims 1 to 6, wherein the antimicrobial substance and/or the antiallergenic substance is applied by spray application, slop padding, or by using a padding machine.

8. Filter medium according to one of the claims 1 to 7, wherein the adsorption layer (5) comprises an open-pored foam with free-flowing activated carbon or a fixed bed of activated carbon.

9. Filter medium according to one of the claims 1 to 8, wherein the adsorption layer (5) features adhesive layers (6) and free-flowing activated carbon (7) introduced therebetween.

10. Filter medium according to one of the claims 1 to 9, wherein the first and/or second filter layer (2) designed as fine filter, in particular for filtering fine particulate matter, having a filtration efficiency greater than 90 %, preferably greater than 92 % and further preferably greater than 97 %, for the aerodynamically determined particle size fraction of 0.3 to 2.5 µm, determined according to DIN 71460-1 with test dust A4 according to ISO 12103-1 at a volume flow of 300 m3/h.

11. Filter medium according to one of the claims 1 to 10, wherein the second filter layer (3) is disposed on the outflow or inflow side with regard to the first filter layer (2).

12. Motor vehicle cabin air filter (8) having a filter medium (1') according to one of the claims 1 to 11.

13. Filter arrangement (12), in particular filter module of a motor vehicle air-conditioning system having a filter seat (13) and a motor vehicle cabin air filter (8) according to claim 12.

## Revendications

1. Milieu filtrant (1'), notamment destiné à filtrer de l'air pour l'habitacle intérieur d'un véhicule automobile, comprenant une première couche filtrante (2) servant à retenir des particules et une seconde couche filtrante (3) qui comporte une substance antimicrobienne et une substance antiallergène, et comprenant également une couche d'adsorption (5) avec du charbon actif hydrophobe qui, à une humidité relative de 50%, présente une absorption d'eau < 10 % en masse, la couche d'adsorption (5) étant disposée entre la première et la seconde couches filtrantes (2, 3).

2. Milieu filtrant selon la revendication 1, la substance antiallergène contenant des polyphénols.

3. Milieu filtrant selon la revendication 2, les polyphénols contenant du tanin ou de l'acide tannique, des extraits de pomme ou des extraits d'agrumes.

4. Milieu filtrant selon la revendication 3, le tanin ou l'acide tannique étant extrait de bois, notamment d'écorces d'arbres.

5. Milieu filtrant selon l'une quelconque des revendications 1 à 4, la substance antiallergène contenant des enzymes.

6. Milieu filtrant selon l'une quelconque des revendications 1 à 5, la substance antimicrobienne étant choisie parmi le groupe de métaux et de composés métalliques antimicrobiens, notamment argent, cuivre et composés d'aluminium, nano-argent, zinc pyrithione, octylisothiazolinone, 2-bromo-2-nitropropane-1,3-diol, composés d'isothiazolinone, acide benzoïque et ses dérivés, halogénures de benzalkonium, coenzymes hydrosolubles, coenzymes oléosolubles, extraits végétaux, antibiotiques, métaux biocides, acides gras aliphatiques et aromatiques et tensides quaternaires.

7. Milieu filtrant selon l'une quelconque des revendications 1 à 6, la substance antimicrobienne et/ou la substance antiallergène étant appliquée par pulvérisation, placage ou à l'aide d'un foulard d'apprêt.

8. Milieu filtrant selon l'une quelconque des revendications 1 à 7, la couche d'adsorption (5) comprenant une mousse à pores ouverts avec un charbon actif présentant une faculté d'écoulement ou un lit fixé composé de charbon actif.

9. Milieu filtrant selon l'une quelconque des revendications 1 à 8, la couche d'adsorption (5) présentant des couches collées (6) avec, entre elles, du charbon actif incorporé (7) présentant une faculté d'écoulement.

10. Milieu filtrant selon l'une quelconque des revendications 1 à 9, la première et/ou la seconde couche filtrante (2) étant exécutée en tant que filtre fin, notamment pour filtrer des particules fines, ayant un pouvoir de filtration supérieur à 90 %, de préférence supérieur à 92 % et encore de préférence supérieur à 97 %, pour la fraction de taille de particules de 0,3 à 2,5 µm, déterminée de manière aérodynamique selon la norme DIN 71460-1 avec une poussière de test A4 conformément à la norme ISO 12103-1 avec un débit volumétrique de 300 m3/h.

11. Milieu filtrant selon l'une quelconque des revendications 1 à 10, la seconde couche filtrante (3) étant disposée du côté sortie ou du côté entrée par rapport à la première couche filtrante (2).

12. Filtre d'habitacle intérieur de véhicule automobile (8) avec un milieu filtrant (1') selon l'une quelconque des revendications 1 à 11.

13. Agencement de filtre (12), notamment module filtrant d'un climatiseur pour véhicule automobile, ayant un logement de filtre (13) et un filtre d'habitacle intérieur de véhicule automobile (8) selon la revendication 12.
